Europäisches Patentamt

European Patent Office

Office européen des brevets

(11) Publication number: **0 028 300**
**A1**

# (12) EUROPEAN PATENT APPLICATION

(21) Application number: **80105196.2**

(22) Date of filing: **01.09.80**

(51) Int. Cl.³: **C 08 F 287/00**

(30) Priority: **18.10.79 US 86221**

(43) Date of publication of application:
**13.05.81 Bulletin 81/19**

(84) Designated Contracting States:
**BE DE FR GB IT**

(71) Applicant: THE FIRESTONE TIRE & RUBBER COMPANY
1200 Firestone Parkway
Akron, Ohio 44317(US)

(72) Inventor: Ambrose, Richard J.
3202 Bancroft Road
Fairlawn OH 44313(US)

(72) Inventor: Hayes, Robert A.
2980 Cedar Hill Road
Cuyahoga Falls OH 44223(US)

(74) Representative: Kraus, Walter, Dr. et al,
Patentanwälte Dres. Kraus & Weisert Irmgardstrasse 15
D-8000 München 71(DE)

(54) Graft copolymers with improved oil acceptance.

(57) Novel graft copolymers having thermoplastic elastomer properties and improved oil acceptability are set forth herein. The graft copolymers have a polymer backbone comprising poly (styrene-*b*-butadiene) and graft branches of poly (*a*-methylstyrene). The graft copolymers of the present invention exhibit oil acceptability comparable to commercial linear triblock thermoplastic elastomers such as poly (styrene-*b*-butadiene-*b*-styrene) and exhibit superior tensile properties to the latter at elevated temperatures. They are also more readily processable than known thermoplastic elastomers containing *a*-methylstyrene.

EP 0 028 300 A1

Croydon Printing Company Ltd

# GRAFT COPOLYMERS HAVING IMPROVED OIL ACCEPTANCE

## Technical Field

The present invention is directed toward graft copolymers of a particular composition which we have found unexpectedly exhibit an improved acceptance to the addition of oil. The monomers employed for the synthesis of the graft copolymers of the present invention have also been utilized for the synthesis of thermoplastic elastomers, generally linear structures designated as ABA triblock copolymers, wherein A represents a rigid, plastic segment, usually a vinyl aromatic such as polystyrene, and wherein B represents a rubbery segment, usually a diene such as polybutadiene or polyisoprene.

The advantages of thermoplastic elastomers lie in the fact that they have properties similar to vulcanized rubber, however, unlike the latter they will soften or melt when heated as is characteristic of thermoplastics. Therefore, reprocessing of scrap or unusable components is possible. Thermoplastic elastomers can undergo thermoplastic molding operations such as injection and blow molding; they are more readily extrudable than vulcanizable rubber; and they have a greater tolerance for the addition of oil than is possible with presently known graft copolymers.

## Background Art

The synthesis and properties of linear triblock ABA thermoplastic elastomers are now fairly well known. More recently it has become known that certain graft copolymer structures can exhibit properties similar to the linear triblock thermoplastic elastomers. One recent U.S. patent that discloses thermoplastic elastomers resulting from cationic graft polymerizations is No. 4,070,420, commonly assigned to the Assignee of record herein. The synthesis therein reported was of poly(butadiene-$g$-$\alpha$-methylstyrene) and was conducted by polymerization of

α-methylstyrene from a chlorinated polybutadiene backbone in the presence of a Friedel-Crafts acid coinitiator, such as trimethyl aluminum, an inert organic solvent and a controlled amount of water.

Tensile properties of the poly(butadiene-$g$-α-methylstyrene) copolymers were investigated on carefully molded samples and were found to exhibit thermoplastic elastomer behavior due to their graft copolymer structure. Both modulus and strength increased with increasing α-methyl-styrene content and tensile strength was highest at the 45-50% by weight α-methylstyrene level. Tensile strength at elevated test temperatures was considerably higher for these copolymers than for the known poly(styrene-$b$-butadiene-$b$-styrene) triblocks. This can be attributed to the higher glass transition temperature for poly(α-methyl-styrene) segments compared to poly(styrene) segments. It is believed that the higher glass transition tempera-ture possessed by poly(α-methylstyrene) contributes to dif-ficulties in processing, particularly in molding the graft copolymer, based upon the reported findings of other workers that triblock copolymers containing α-methylstyrene cannot be molded.

Thermoplastic elastomer behavior is exhibited by the ABA triblocks and the graft copolymers because in both structures, the hard segments migrate into domains which impart physical crosslinks and reinforcement to the elastomeric matrix. In spite of this basic similarity, however, there are subtle differences between the triblock and graft copolymer structures that can influence the mechanical properties of these materials. Most notably, the molecular weight betwen physical tie points is constant in ABA triblock polymers but variable in graft copolymers depending on position and number of grafts per chain. In addition, triblock polymers have no loose or dangling elastomeric chain ends while this is rarely the case with graft copolymers. In principle, a graft copolymer should have at least two rigid grafts per chain in order for the copolymer to possess thermoplastic elastomer characteristics. Even then the grafts must be reasonably well spaced or a uniform network will not result.

Notwithstanding the present state of knowledge regarding properties of graft copolymers exhibiting thermoplastic elastomer behavior, graft copolymers have not been known heretofore that can accept oil in as high amounts as the ABA linear triblocks without suffering a significant loss of tensile strength and modulus. Nor, have graft copolymers containing α-methylstyrene been readily moldable.

## Disclosure of Invention

It is therefore an object of the present invention to provide a novel graft copolymer having an elastomeric backbone and rigid grafted side chains comprising vinyl aromatics which copolymer exhibits properties of linear triblock thermoplastic elastomers.

It is another object of the present invention to provide a novel graft copolymer the tensile strength of which does not decrease upon the addition of moderate amounts of oil.

It is yet another object of the present invention to provide a novel graft copolymer having greater tensile strength at elevated test temperatures than that possessed by linear triblock thermoplastic elastomers.

It is still another object of the present invention to provide a novel graft copolymer having a diblock copolymer backbone.

It is a further object of the present invention to provide a novel graft copolymer having improved processability e.g., via molding, than known graft copolymers having other thermoplastic elastomer properties.

It is further still an object of the present invention to provide a novel graft copolymer comprising poly(styrene-b-butadiene-g-α-methylstyrene).

These and other objects, together with the advantages thereof over the prior art, which shall become apparent from the specification which follows, are accomplished by our invention as hereinafter described and claimed.

In general, the novel graft copolymer of the present invention retains its tensile strength when modified or extended with oil in amounts of up to 44 parts per 100 parts of polybutadiene. Graft copolymers heretofore have lost up to 50% of their tensile strength when extended with oil in these amounts. The high temperature properties of these novel graft copolymers are superior to conventional poly(styrene-*b*-butadiene-*b*-styrene) or SBS, triblock copolymers, before addition of oil and are as good as those for the SBS when both carry equivalent amounts of oil. The graft copolymers of the present invention also process better than the known graft copolymers having polybutadiene backbones.

Synthesis of the novel graft copolymer herein is not deemed to be particularly novel. One suitable method is disclosed in order to enable those skilled in the art to obtain the copolymers of the present invention.

## Preferred Mode for Carrying Out the Invention

Synthesis of the graft copolymer of the present invention poly(styrene-*b*-butadiene-*g*-α-methylstyrene) hereinafter abbreviated PS-*b*-PBd-*g*-Pα-MS is via a synthesis disclosed in U.S. Pat. No. 4,707,420, the subject matter of which is hereby incorporated by reference. One major difference between the graft copolymer described therein and ours is the backbone, the former being polybutadiene while ours is the diblock PS-*b*-PBd.

The styrene-butadiene backbone of the present invention can be prepared anionically in the presence of a suitable solvent such as cyclohexane and an organolithium initiator, RLi, which is hydrocarbon soluble wherein the R represents an aliphatic, cycloaliphatic or aromatic radical. Such compounds are well known and selection of a suitable one can be made merely on the basis of availability, with n-butyllithium being typical. The amount of initiator employed will depend on the desired molecular weight of the diblock as is known by those skilled in the art. In terms of number average molecular weight, we consider a weight range of from about $3\times10^3$ to $25\times10^3$ for the polystyrene segment to be satisfactory with $8\times10^3$ to $12\times10^3$ being preferred, and a weight range of from about $25\times10^3$ to $210\times10^3$ for the polybutadiene segment to be satisfactory, with $60\times10^3$ to $80\times10^3$ being preferred. Amounts of the polystyrene segment in the graft copolymer range from about 5 to 15 weight percent. The microstructure of the polybutadiene segments is high 1,4 content.

In addition to styrene-butadiene backbones, other anionically polymerizable backbones could be utilized. Thus, in lieu of butadiene, isoprene can be employed with styrene or α-methylstyrene can be substituted for the styrene. Another useful rubbery segment for the backbone is SBR which can itself be polymerized with styrene.

Synthesis generally involves the steps of polymerizing one of the monomers *i.e.*, styrene in the presence of the n-butyllithium initiator, to form a lithium terminated polystyrene, followed by the addition of the other monomer *i.e.*, butadiene, which will form a block polymer from the first lithium-terminated block. In order for grafting to occur, it is necessary that the polymer backbone carry halogen functionality wherein the halogen atoms are on allylic, tertiary or benzylic carbon atoms. The halogen can be fluorine, chlorine, bromine or iodine with chlorine being preferred and the halogen functionality can be introduced with any suitable post-polymerization technique. One such technique has been described by R. J. Ambrose and J. J. Newell, J. Polymer Sci., Polymer Chemistry Ed., 17, 2129 (1979), the subject matter of which is hereby incorporated by reference.

Grafting is conducted cationically in the presence of a Friedel-Crafts acid such as trimethyl aluminum which acts as a coinitiator with the halogens of the polymer backbone to initiate grafting of the α-MS. Alternatively, if desired styrene can be substituted to form the graft branches. According to the preferred process set forth in the aforementioned patent, No. 4,070,420, water is also employed to promote the grafting rate of a monomer conversion. Number average molecular weight of the graft branches can range from about $30 \times 10^3$ to about $200 \times 10^3$ with a preferred range of $50 \times 10^3$ to $60 \times 10^3$ and the amount of graft α-MS in the graft copolymer can range from about 5 to 60 weight percent with a preferred range of 30 to 40.

A typical synthesis of the graft copolymer was as follows:

Grafting was conducted in toluene containing $2.67 \times 10^{-3}$ M water. Trimethyl aluminum was employed as a 1.25 to 1.50 M solution in hexane. In the first step, 45 g of chlorinated styrene-butadiene diblock backbone (chlorine content 0.5-1.5% Cl by weight) was dissolved in 2200 cc of wet toluene. The temperature was lowered to -50°C. and 30 cc of α-MS was added. To this 10-20 cc of 1.5 M trimethyl aluminum was added (exact amount added to give an Al/Cl ratio of 1.5) and an immediate exotherm was noted. The reaction was terminated with 2 cc of 10% sodium methoxide in methanol when the exotherm reached -46°C. This usually took from 10-30 seconds. Precipitation with methanol and vacuum drying overnight at 50°C. followed. In order to avoid post polymerization gellation reactions in the graft copolymers after standing for several weeks, the catalyst residue (aluminum) should be removed. In those cases where it was desirable to remove catalyst residues, the terminated graft copolymer solution was washed 2-3 times with a saturated water solution of potassium acid tartrate and then with water until neutral.

In order to demonstrate the improved physical properties of the graft copolymer disclosed herein, tensile strength, modulus and elongation measurements were conducted on it and, for comparison, on a graft copolymer containing 41 percent by weight α-MS and having thermo-

7.

plastic elastomer properties but only a polybutadiene backbone, and on a conventional SBS triblock, Kraton K1101 which contained 32 percent by weight styrene. These measurements were made according to ASTM Method D-412.

The only compounding ingredient employed was a naphthenic oil obtained from the Shell Chemical Co. (Shellflex 371-N) and used without further purification. The oil was added to the copolymers on a mill at 85°C. at the 44 part per hundred polybutadiene level. All samples were compression molded at 160°C. for 10 minutes and cooled under pressure. Tensile properties were measured on rings cut from 9.19 mm thick molded samples.

The compositions, backbone molecular weights, grafting efficiencies (G.E.) and backbone allylic chlorine concentrations [Allylic Cl] of the graft copolymers examined are presented in Tables I and II for PBd-$g$-Pα-MS and PS-$b$-PBd-$g$-Pα-MS graft copolymers respectively. Grafting efficiencies were high in all of the copolymers listed. The allylic chlorine concentrations of the polymer backbones are also included inasmuch as the number of grafts per chain increases as the allylic chlorine concentration increases.

Table I

Characterization of PBd-$g$-Pα-MS Copolymers

| Sample No. | α-MS in Copolymer wt. % | G.E. % | [Allylic Cl] wt. % | $\bar{M}_n$ PBd Backbone g/mole x $10^{-5}$ |
|---|---|---|---|---|
| 1 | 30 | 88 | 0.50 | 1.16 |
| 2 | 41 | 86 | 0.50 | 1.16 |
| 3 | 46 | 98 | 0.47 | 1.14 |
| 4 | 46 | 94 | 0.46 | 1.14 |
| 5 | 50 | 92 | 0.47 | 1.14 |

## Table II

### Characterization of PS-$b$-PBd-$g$-Pα-MS Copolymers

| Sample No. | α-MS in Copolymer wt. % | Styrene in Copolymer wt. % | G.E. % | [Allylic Cl] wt. % | $\overline{M}_n$ PS-$b$-PBd Backbone g/mole x $10^{-5}$ |
|---|---|---|---|---|---|
| 6 | 29 | 14 | 100 | 0.41 | 1.15 |
| 7 | 27 | 15 | 100 | 1.54 | 1.15 |

As stated hereinabove, graft copolymers having polybutadiene backbones *e.g.*, the PBd-$g$-Pα-MS copolymers of Table I, exhibit tensile strengths comparable to commercial SBS linear triblock copolymers such as Kraton 1101 at room temperature and superior thereto at 100°C., however, the oil acceptance of these graft copolymers is always inferior to that of the commercial SBS. Table III illustrates these results by comparing a known graft copolymer PBd-$g$-Pα-MS containing 41 percent by weight α-MS (Sample No. 2 Table I) with a K1101 triblock copolymer having 32 percent by weight styrene. The amount of oil added to each sample was 44 parts per 100 parts butadiene.

### Table III

| Copolymer | Test Temp. (0°C) | Elongation (%) | Modulus (MPa) 100 | 300 | Break |
|---|---|---|---|---|---|
| PBd-$g$-Pα-MS | 23 | 700 | 2.6 | 3.3 | 14.5 |
| K1101 | 23 | 790 | 2.2 | 2.8 | 17.6 |
| PBd-$g$-Pα-MS | 100 | 670 | 1.5 | 1.8 | 4.6 |
| K1101 | 100 | 150 | 1.4 | -- | 1.4 |
| PBd-$g$-Pα-MS + oil | 23 | 710 | 0.9 | 2.0 | 7.0 |
| K1101 + oil | 23 | 1040 | 1.1 | 1.6 | 16.1 |

It is readily seen that the tensile strength of the K1101 sample is essentially unchanged upon addition of oil but that of the PBd-$g$-Pα-MS copolymer is decreased by more than 50 percent.

In order to demonstrate the improved oil acceptance of the graft copolymers of the present invention, tensile strength comparisons were made with K1101 against two PS-*b*-PBd-*g*-Pα-MS graft copolymers first, No. 6 in Table II containing 29 percent α-MS and 14 percent styrene, all percentages being by weight. Properties at room temperature, at 100°C. and with 44 parts of oil per 100 parts butadiene are reported in Table IV.

Table IV

| Copolymer | Test Temp. (0°C) | Elongation % | Modulus (MPa) 100 | 300 | Break |
|---|---|---|---|---|---|
| PS-*b*-PBd-*g*-Pα-MS | 23 | 535 | 4.6 | 8.8 | 16.9 |
| K1101 | 23 | 790 | 2.2 | 2.8 | 17.6 |
| PS-*b*-PBd-*g*-Pα-MS | 100 | 510 | 2.8 | 4.4 | 6.9 |
| K1101 | 100 | 150 | 1.4 | -- | 1.4 |
| PS-*b*-PBd-*g*-Pα-MS + oil | 23 | 825 | 2.1 | 4.4 | 12.7 |
| K1101 | 23 | 1040 | 1.1 | 1.6 | 16.1 |

The graft copolymer reported in Table IV (Sample No. 6 of Table II) was prepared from a backbone containing one chlorine atom per every 140 backbone monomer units, the same ratio characterizing the polybutadiene backbone of the graft copolymer reported in Table III. While a decrease in tensile strength was again evident upon the addition of oil to the graft copolymer, the decrease was less dramatic than when the polybutadiene backbone graft copolymer was employed.

In a second effort to improve oil acceptability of the graft copolymers, a styrene-butadiene backbone was chlorinated so as to contain one chlorine atom per every 50 backbone monomer units, following which grafting was conducted. The tensile properties of this copolymer (Sample No. 7 in Table II) containing 27 percent α-MS and 15 percent styrene, compared with K1101 is reported in Table V.

10.

### Table V

| Copolymer | Test Temp. (0°C) | Elongation % | Modulus (MPa) 100 | 300 | Break |
|---|---|---|---|---|---|
| PS-$b$-PBd-$g$-P$\alpha$-MS | 23 | 425 | 4.4 | 9.3 | 14.2 |
| K1101 | 23 | 790 | 2.2 | 2.8 | 16.6 |
| PS-$b$-PBd-$g$-P$\alpha$-MS | 100 | 460 | 2.8 | 3.8 | 5.0 |
| K1101 | 100 | 150 | 1.4 | -- | 1.4 |
| PS-$b$-PBd-$g$-P$\alpha$-MS + oil | 23 | 920 | 2.0 | 3.8 | 15.5 |
| K1101 + oil | 23 | 1040 | 1.1 | 1.6 | 16.1 |

It can be readily observed that the oil acceptance of the graft copolymer (No. 7) is improved in that there is no loss of tensile strength upon addition of oil. In fact, the tensile strength of the graft copolymer containing oil is slightly higher than the corresponding sample without oil. As has been true in all previous comparisons, the tensile strength of the graft copolymer at elevated test temperatures (100°C.) is superior to that of K1101.

From the data reported in Tables III-V, two conclusions can be drawn regarding improved oil acceptability. First, the polymer backbone in the graft copolymer must be a block copolymer and not merely polybutadiene. Second, the ratio of chlorine atoms in the backbone must be at least one per 50 backbone monomer units. This ratio will give rise to at least two grafts per backbone.

With regard to processability, triblock copolymers containing α-methylstyrene segments do not process well. This fact has been recognized and reported by others, L. J. Fetters and M. Morton, Macromol., 2 (5), 453 (1969), for α-methylstyrene-isoprene triblock copolymers, which copolymers could not be molded at all, necessitating measurements of tensile properties to be conducted on cast films. Lack of moldability was attributed to the high softening point of α-methylstyrene segments and the poor processability of poly(α-methylstyrene) in general.

11.

In contrast to the α-methylstyrene-isoprene triblocks, processability is somewhat improved for the butadiene backbone α-methylstyrene graft copolymers, such as those reported in Table III, allowing these to be molded, albeit with considerable effort. In fact, even with oil, smooth plaques were difficult to obtain in compression molding and a large batch of the graft copolymer (4.4 Kg.) containing 40 percent α-methylstyrene gave a rough extrudate upon extrusion. A well-fused continuous strand could not be obtained from this graft copolymer unlike K1101.

However, when a styrene-butadiene diblock backbone is employed for the synthesis of the graft copolymers of the present invention processability unexpectedly improves. While one does not expect intuitively such an improvement inasmuch as the graft copolymers still contain α-methylstyrene segments, nevertheless, the improvement in processability of the novel graft copolymers set forth herein over those containing polybutadiene backbones is real because the former can be compression molded into smooth sheets with and without oil. Tensile strengths of these graft copolymers are within the range of from about 12 to 18 MPa (122 to 184 Kg/cm), making them useful as thermoplastic elastomers.

It is to be understood that the examples appearing in Tables II, IV and V, have been provided merely to present results obtainable by practice of the present invention. Inasmuch as we have disclosed ranges over which the percent composition of the graft copolymer disclosed herein can vary as well as the components comprising the graft copolymer, we do not intend to limit our invention to the graft copolymers exemplified herein. Furthermore, the method of synthesis disclosed herein is merely exemplary and we therefore expect that the novel graft copolymers of this invention could be obtained by other methods.

Thus, it can be seen that the disclosed invention carries out the objects set forth hereinabove. As will be apparent to those skilled in the art, the amounts of

styrene, butadiene and α-methylstyrene or other monomers substituted therefor in the graft copolymer, can be varied and it is believed that the determination of particular monomers as well as the amounts thereof can be made, depending upon the results desired, without departing from the spirit of the invention herein disclosed and described, the scope of the invention being limited solely by that of the attached claims.

WE CLAIM:

1. A novel graft copolymer comprising: poly(styrene-b-butadiene-g-α-methylstyrene).

2. A novel graft copolymer, as set forth in claim 1, having at least two graft branches per polymer backbone.

3. A novel graft copolymer as set forth in claim 1, containing from about 5 to about 15 weight percent of polystyrene and; from about 5 to about 60 weight percent of poly(α-methylstyrene).

4. A novel graft copolymer as set forth in claim 1, wherein the number average molecular weight of said polybutadiene blocks in the polymer backbone ranges from about $3 \times 10^3$ to about $25 \times 10^3$; wherein the number average molecular weight of said polystyrene blocks in the polymer backbone ranges from about $25 \times 10^3$ to about $210 \times 10^3$; and, wherein the number average molecular weight of said poly(α-methylstyrene) branches ranges from about $30 \times 10^3$ to about $200 \times 10^3$.

5. A novel graft copolymer, as set forth in claim 1, having improved oil acceptability with amounts of oil of up to 44 parts per 100 parts of butadiene.

6. A novel graft copolymer, as set forth in claim 2, having a tensile strength of from about 12 to 18 MPa.

European Patent
Office

**EUROPEAN SEARCH REPORT**

Application number
EP 80 10 5196

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | <u>FR - A - 1 492 011</u> (SHELL)<br>  * Abstract 1°,2°,5°egi; page 3, column 1, paragraph 1 *<br>& US - A - 3 485 894<br><br>----  | 1,2,4 | C 08 F 287/00 |

**TECHNICAL FIELDS SEARCHED (Int. Cl.³)**

C 08 F 287/00
279/00
279/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search<br>The Hague | Date of completion of the search<br>23-01-1981 | Examiner<br>J.C.J.J. PEETERS |

EPO Form 1503.1  06.78